# EUROPÄISCHE PATENTANMELDUNG

(11) **EP 4 300 486 A1**
(43) Veröffentlichungstag der Anmeldung: **03.01.2024**
(21) Anmeldenummer: 23175950.7
(22) Anmeldetag: 30.05.2023
(51) Int. Cl.: G10L 15/22, G10L 15/28, G06F 3/01, G06F 3/16

(54) **VERFAHREN ZUR SPRACHSTEUERUNG EINES HAUSHALTSGERÄTS SOWIE EIN HAUSHALTSGERÄT**

(30) Priorität: 30.06.2022 BE 202205536
(71) Anmelder: Miele & Cie. KG, 33332 Gütersloh (DE)
(72) Erfinder: Carsten, Daniel, 33615 Bielefeld (DE)

(57) **Zusammenfassung**

Die vorliegende Erfindung betrifft ein Verfahren zur Sprachsteuerung eines ersten Haushaltsgeräts. Das Verfahren umfasst die folgenden Schritte: Einlesen von Kameradaten einer Kamera, wobei die Kamera eingerichtet ist, Bilder eines Nutzers im Bereich des ersten Haushaltsgeräts aufzunehmen; Einlesen von Mikrofondaten eines Mikrofons, wobei das Mikrofon eingerichtet ist, Tonsignale im Bereich des ersten Haushaltsgeräts aufzunehmen; Analysieren der eingelesenen Kameradaten und Mikrofondaten mit Hilfe eines Algorithmus, wobei die Kameradaten durch den Algorithmus in Bezug auf eine Position und/oder wenigstens eine Bewegung des Nutzers im Bereich des Haushaltsgeräts analysiert werden, wobei die Mikrofondaten durch den Algorithmus in Bezug auf einen vom Nutzer gesprochenen Sprachbefehl analysiert werden, und, wenn ein Sprachbefehl durch den Algorithmus in den Mikrofondaten erkannt wurde und wenn eine Position und/oder eine Bewegung des Nutzers im Bereich des ersten Haushaltsgeräts durch den Algorithmus in den Kameradaten erkannt wurde, analysieren der Kameradaten und Mikrofondaten hinsichtlich einer Korrelation zwischen dem erkannten Sprachbefehl und der erkannten Position und/oder der erkannten Bewegung des Nutzers im Bereich des ersten Haushaltsgeräts; Steuern des ersten Haushaltsgeräts in Abhängigkeit von dem Sprachbefehl, wenn eine Korrelation zwischen dem erkannten Sprachbefehl und der Position und/oder Bewegung des Nutzers durch den Algorithmus feststellt wurde.

## Beschreibung

Die Erfindung betrifft ein Verfahren zur Sprachsteuerung eines ersten Haushaltsgeräts, ein Haushaltsgerät ein System von Haushaltsgeräten. Der Gegenstand der Erfindung ist in den beigefügten Patentansprüchen definiert.

Im Stand der Technik werden Sprachassistenten im Haushalt gerne für verschiedene Informations- und Assistenzfunktionen verwendet. Die Bedienung von Hausgeräten mittels Sprachbedienung unterliegt allerdings diversen Regularien, um mögliche Fehlbedienungen zu vermeiden. Typische Haushaltsgeräte für eine Sprachsteuerung können beispielsweise ein Backofen, Dampfgarer oder eine Mikrowelle sein. Insbesondere bei Haushaltsgeräten muss sichergestellt werden, dass sich eine Person in der Nähe des Hausgerätes befindet, um dieses vollständig per Sprache bedienen zu dürfen, um so eine Fehlbedienung oder eine Gefahrensituation zu vermeiden.

Typischerweise benötigt der Sprachassistent ein sogenanntes Triggersignal, damit der Beginn eines Sprachbefehls erkannt werden kann. Dabei handelt es sich bei dem Triggersignal häufig um ein Code-Wort, wie beispielsweise der Name des Sprachassistenten. Alternativ kann auch das Betätigen eines Bedienfeldes, z.B. das Drücken einer Push-to-Talk-Taste, den Sprachassistenten aktivieren. Zudem muss ein Sprachbefehl aus einer Beschreibung bestehen, damit der Algorithmus, der den Befehl verarbeitet, den Kontext des Befehls erkennen kann. Ohne eine derartige Beschreibung kann der Sprachassistent eine Anweisung nicht einem Haushaltsgerät zuordnen.

Die bekannte vorbeschriebene Art der Aktivierung des Sprachassistenten bzw. der Sprachsteuerung und der Bedienung mittels langer Befehle sind jedoch für einen Nutzer äußerst unkomfortabel, wenig intuitiv und bei der Umsetzung fehleranfällig.

Es besteht daher ein Bedarf im Stand der Technik, die Bedienung von Haushaltsgeräten durch Sprache zu verbessern und einer natürlichen Kommunikation anzunähern.

Aufgabe der Erfindung ist daher die Bereitstellung einer verbesserten Sprachsteuerung eines Haushaltsgeräts, um so die Nachteile im Stand der Technik zu beseitigen.

Die Aufgabe wird durch das in Anspruch 1 beschriebene Verfahren sowie das in Anspruch 11 beschriebene Haushaltsgerät und das in Anspruch 13 beschriebene System gelöst. Bevorzugte erfindungsgemäße Ausgestaltungen ergeben sich aus den Unteransprüchen und den nachfolgenden Ausführungen.

Gemäß einem ersten Aspekt der Erfindung wird die Aufgabe durch ein Verfahren zur Sprachsteuerung eines ersten Haushaltsgeräts gemäß Anspruch 1 gelöst. Das Verfahren umfasst die Schritte:
- Einlesen von Kameradaten einer Kamera, wobei die Kamera eingerichtet ist, Bilder eines Nutzers im Bereich des ersten Haushaltsgeräts aufzunehmen,
- Einlesen von Mikrofondaten eines Mikrofons, wobei das Mikrofon eingerichtet ist, Tonsignale im Bereich des ersten Haushaltsgeräts aufzunehmen,
- Analysieren der eingelesenen Kameradaten und Mikrofondaten mit Hilfe eines Algorithmus umfassend die Teilschritte:
   o Analysieren der Kameradaten durch den Algorithmus in Bezug auf eine Position und/oder wenigstens eine Bewegung des Nutzers im Bereich des Haushaltsgeräts,
   o Analysieren der Mikrofondaten durch den Algorithmus in Bezug auf einen vom Nutzer gesprochenen Sprachbefehl,
   o Analysieren der Kameradaten und Mikrofondaten hinsichtlich einer Korrelation zwischen dem erkannten Sprachbefehl und der erkannten Position und/oder der erkannten Bewegung des Nutzers im Bereich des ersten Haushaltsgeräts, wenn ein Sprachbefehl durch den Algorithmus in den Mikrofondaten erkannt wurde und wenn eine Position und/oder eine Bewegung des Nutzers im Bereich des ersten Haushaltsgeräts durch den Algorithmus in den Kameradaten erkannt wurde,
- Steuern des ersten Haushaltsgeräts in Abhängigkeit von dem Sprachbefehl, wenn eine Korrelation zwischen dem erkannten Sprachbefehl und der Position und/oder Bewegung des Nutzers durch den Algorithmus erkannt wurde.

Im Sinne dieser Erfindung ist eine Kamera jedes geeignete Bauteil, welches statische oder bewegte Bilddaten aufnehmen kann. Kameras können vorzugsweise CMOS- oder CCD-Sensoren oder andere zur Aufnahme von Bilddaten geeignete Sensoren aufweisen oder sein. Vorzugsweise weist die Kamera eine Optik auf, die Aufnahmen im Weitwinkelbereich erlaubt. Dies hat den Vorteil, dass die Kamera bündig mit der Oberfläche des Haushaltsgeräts abschließen kann, gleichzeitig jedoch das volle Blickfeld um den Bereich des ersten Haushaltsgeräts aufnehmen kann.

Im Sinne der Erfindung ist ein Mikrofon ein elektronischer Schallwandler, der Schallwellen in elektrische Signale wandelt. Das Mikrofon kann vorzugsweise in dem ersten Haushaltsgerät umfasst sein. Alternativ kann das Mikrofon als separates Gerät oder separate Vorrichtung vorgesehen sein. Wenn das Mikrofon als separates Gerät vorgesehen ist, kann das Mikrofon über eine physische Verbindung oder eine Funkverbindung mit dem ersten Haushaltsgerät verbunden sein. Eine physische Verbindung im Sinne der Erfindung ist eine Kabelverbindung zwischen dem ersten Haushaltsgerät und dem separaten Mikrofon. Die Funkverbindung kann über eine lokale Funkverbindung, z.B. über Bluetooth, WiFi, 4G, 5G, ZigBee, erfolgen. Alternativ kann die Funkverbindung auch mittels einer Verbindung zu einem externen Clouddienst und anschließend zu dem ersten Haushaltsgerät erfolgen.

Unter einer Aufnahme von Bildern eines Nutzers im Bereich des ersten Haushaltsgeräts ist im Sinne der Erfindung die Aufnahme von Bildern eines Nutzers zu verstehen, der sich direkt vor dem Haushaltsgerät oder neben dem Haushaltsgerät aufhält. Bevorzugt hat der Nutzer einen Abstand von weniger als 2 m, vorzugweise weniger als 1,5 m, weiter bevorzugt weniger als 1 m zum ersten Haushaltsgerät. Unter dem Einlesen von Mikrofondaten durch das Mikrofon im Bereich des ersten Haushaltsgeräts ist im Sinne der Erfindung die Aufnahme von Tonsignalen im Abstand von bis zu 2 m, vorzugweise weniger als 1,5 m, weiter bevorzugt weniger als 1 m zum ersten Haushaltsgerät zu verstehen. Im Sinne der Erfindung sind Tonsignale Schallsignale und Mikrofondaten umfassen die vom Mikrofon aufgenommenen und in elektrische Signale umgewandelte Tonsignale.

Das Analysieren des Kameradaten und Mikrofondaten sowie die Analyse in Bezug auf eine Korrelation der Kameradaten und Mikrofondaten kann lokal, beispielsweise im ersten Haushaltsgerät oder in einem separaten, zum ersten Haushaltsgerät externen, Datenprozessor erfolgen. Alternativ dazu können die vorgenannten Analysen auch in einem externen Cloud-Dienst erfolgen.

Im Sinne der Erfindung beschreibt ein Sprachbefehl eine vom Nutzer gegebene Anweisung, die durch eine Steuerung, z.B. im ersten Haushaltsgerät oder einem externen Gerät, einer Aktion des ersten Haushaltsgeräts zugeordnet werden kann. Beispiele für Sprachbefehle können "Öffnen", "Schließen", "Anschalten", "Ausschalten" sein.

Das erfindungsgemäße Verfahren ermöglicht durch die Kombination und Korrelation von Kameradaten und Mikrofondaten eine komfortablere und intuitivere Bedienung. Es werden Bild und Sprache kombiniert, um einen eindeutigeren Kontextbezug herzustellen, der eine Erkennung der Absicht des Nutzers in Bezug auf das Haushaltsgerät erlaubt. Dies erhöht die Sicherheit bei der Benutzung der Sprachsteuerung und erlaubt eine nahezu vollständige und sichere Bedienung des Hausgerätes über Sprache. Zudem muss nun weder ein Code-Wort zur Aktivierung der Sprachsteuerung bzw. des Sprachassistenten genannt werden, noch eine Taste (Push-to-Talk) gedrückt werden. Schließlich bietet das erfindungsgemäße Verfahren die Möglichkeit, auf lange, kontext-beschreibende Befehle zur Bedienung zu verzichten und kurze Sprachebefehle zu verwenden. Dies verbessert den Bedienkomfort für den Nutzer deutlich und steigert den Erfolg der Bedienung.

In einer bevorzugten Ausführungsform des Verfahrens zur Sprachsteuerung gemäß dem ersten Aspekt der Erfindung werden die Mikrofondaten als erstes analysiert und die Kameradaten werden als zweites analysiert, wobei die Kameradaten erst analysiert werden, wenn von dem Algorithmus in den Mikrofondaten ein Sprachbefehl erkannt wurde.

Diese Ausführungsform hat ist eine von zwei vorteilhaften Varianten im Analyseablauf. Der Vorteil der beiden Varianten liegt in einer ressourcenschonenden Arbeitsweise bei der Verarbeitung der Daten.

In einer bevorzugten Ausführungsform des Verfahrens zur Sprachsteuerung gemäß dem ersten Aspekt der Erfindung werden die Kameradaten als erstes analysiert und die Mikrofondaten werden als zweites analysiert, wobei die Mikrofondaten erst analysiert werden, wenn in den Kameradaten von dem Algorithmus eine Position und/oder wenigstens eine Bewegung des Nutzers im Bereich des Haushaltsgeräts erkannt wurde.

Diese Ausführungsform hat ist die zweite von zwei vorteilhaften Varianten im Analyseablauf. Der Vorteil der beiden Varianten liegt in einer ressourcenschonenden Arbeitsweise bei der Verarbeitung der Daten.

In einer bevorzugten Ausführungsform des Verfahrens zur Sprachsteuerung gemäß dem ersten Aspekt der Erfindung werden die Kameradaten und die Mikrofondaten jeweils in Abhängigkeit von der Zeit aufgenommen, wobei die Korrelation zwischen dem erkannten Sprachbefehl in den Mikrofondaten und der erkannten Position und/oder der erkannten Bewegung des Nutzers in den Kameradaten einem zeitgleichen Auftreten des Sprachbefehls und der Position und/oder Bewegung des Nutzers entspricht.

Anders ausgedrückt kann eine Korrelation zwischen dem erkannten Sprachbefehl und der Position und/oder Bewegung des Nutzers eine zeitlich synchrone Abgabe des Sprachbefehls durch den Nutzer und seiner zeitgleichen Position und/oder seiner Bewegung sein.

Dies hat den Vorteil, dass mehrere Faktoren bei der automatischen Aktivierung der Sprachsteuerung einfließen können. Beispielsweise kann durch den Algorithmus eine Lippenbewegung und/oder eine einen Gegenstand zum ersten Haushaltsgerät hinführende Hand- und/oder Armbewegung mit dem Sprachbefehl verknüpft werden. Damit kann eine Zuordnung der Lippenbewegung zu dem Sprachbefehl erfolgen und der Algorithmus kann dem Sprachbefehl aufgrund der Hand- und/oder Armbewegung vor dem ersten Haushaltsgerät eindeutig einer Aktion des ersten Haushaltsgeräts zuordnen. Die führt zu einer starken Verbesserung der Erkennungsgenauigkeit des Algorithmus sowie eine Verbesserung der Sicherheit bei der Sprachsteuerung.

In einer bevorzugten Ausführungsform des Verfahrens zur Sprachsteuerung gemäß dem ersten Aspekt der Erfindung ist oder umfasst der Algorithmus einen Maschinenlernalgorithmus oder einen Algorithmus aus dem Bereich der künstlichen Intelligenz.

Im Sinne der Erfindung ist ein Maschinenlernalgorithmus ein Algorithmus, der während einer Lernphase durch Beispiele lernt und nach Beendigung der Lernphase verallgemeinerte Regeln ableitet und anwendet. Im Sinne der Erfindung umfasst ein Algorithmus aus dem Bereich der künstlichen Intelligenz bevorzugt künstliche neuronale Netze. Ein Beispiel für eine Algorithmusklasse aus dem Bereich der künstlichen neuronalen Netze ist ein Convolutional Neural Network (CNN).

Maschinenlernalgorithmen und Algorithmen aus dem Bereich der künstlichen Intelligenz haben eine hohe Leistungsstärke und Treffsicherheit bei der Analyse von Daten und insbesondere bei der Mustererkennung. Dadurch können die Daten im erfindungsgemäßen Verfahren schnell und zuverlässig analysiert werden und bei im Ergebnis eine hohe Erkennungsgenauigkeit und damit auch hohe Bedienerzufriedenheit erzielt werden.

In einer bevorzugten Ausführungsform des Verfahrens zur Sprachsteuerung gemäß dem ersten Aspekt der Erfindung ist eine Bewegung des Nutzers eine Lippenbewegung, eine Augenbewegung und/oder Augenausrichtung des Nutzers in Richtung des ersten Haushaltsgeräts, eine Handhaltung und/oder eine Handbewegung des Nutzers, eine Armhaltung und/oder Armbewegung des Nutzers und/oder eine Orientierung und/oder Bewegung eines Körpers und/oder eines Oberkörpers des Nutzers in Richtung der Kamera und/oder des Haushaltsgeräts.

Die vorgenannten Bewegungen des Nutzers sind besonders einfach mit Hilfe von Algorithmen zu erkennen und tragen somit zur Verbesserung des Analyseergebnis und somit zur Sicherheit bei der Sprachsteuerung bei.

In einer bevorzugten Ausführungsform des Verfahrens zur Sprachsteuerung gemäß dem ersten Aspekt der Erfindung ist die Kamera in einer Abdeckung oder Blende des ersten Haushaltsgeräts angeordnet ist.

Derartige Kameras können mit wenig Aufwand in das erste Haushaltsgerät integriert werden. Zudem erleichtert eine Integration der Kamera die Reinigung der Abdeckung des Haushaltsgeräts.

In einer bevorzugten Ausführungsform des Verfahrens zur Sprachsteuerung gemäß dem ersten Aspekt der Erfindung ist die Kamera in einem zweiten Haushaltsgerät angeordnet ist oder eine selbstständige Vorrichtung, wobei das zweite Haushaltsgerät oder die selbstständige Vorrichtung mit dem ersten Haushaltsgerät über eine physische Verbindung oder eine Funkverbindung verbunden ist.

Wenn die Kamera als separate Vorrichtung ausgeführt ist, kann die Kamera mit dem ersten Haushaltsgerät über eine physische Verbindung oder eine Funkverbindung mit dem ersten Haushaltsgerät verbunden sein. Eine physische Verbindung ist im Sinne der Erfindung eine Kabelverbindung zwischen dem ersten Haushaltsgerät und der separaten Kamera. Die Funkverbindung kann über eine lokale Funkverbindung, z.B. über Bluetooth, WiFi, 4G, 5G, ZigBee, erfolgen. Alternativ kann die Funkverbindung auch mittels einer Verbindung zu einem externen Clouddienst und anschließend zu dem ersten Haushaltsgerät erfolgen.

Dies hat den Vorteil, dass im Bereich des ersten Haushaltsgeräts vorhandene Kameras auch für das erfindungsgemäße Verfahren zur Bedienung des ersten Haushaltsgeräts verwendet werden können. Beispielsweise kann damit ein erstes Haushaltsgerät, welche über keine eigene Kamera verfügt, mit der Bedienbarkeit über eine Sprachsteuerung gemäß der Erfindung mit wenig Aufwand nachgerüstet werden. Eine derartige Nachrüstung kann beispielsweise lediglich ein Softwareupdate sein.

In einer bevorzugten Ausführungsform des Verfahrens zur Sprachsteuerung gemäß dem ersten Aspekt der Erfindung werden im Schritt des Steuerns des ersten Haushaltsgeräts durch das erste Haushaltsgerät wenigstens eine oder mehrere der folgenden Aktionen durchgeführt: eine Öffnung des ersten Haushaltsgeräts öffnet oder schließt; das erste Haushaltsgerät bereitet eine Aufnahmevorrichtung zur Aufnahme eines Gegenstands vor und/oder nimmt den Gegenstand an; eine weitere Funktion des ersten Haushaltsgeräts wird aktiviert, unterbrochen, beendet, oder umkehrt; eine Notfallfunktion oder ein Notaus des Haushaltsgeräts wird ausgeführt.

Eine Aufnahmevorrichtung kann beispielsweise ein Satz Haltearme sein, die im Dampfgarer ein Behältnis zum Dampfgaren oder ein Backblech im Backofen aufnehmen. Eine Notfallfunktion kann beispielsweise eine Aktivierung einer Absaugfunktion sein, z.B. wenn Back- oder Gargut im Backofen angebrannt ist. Ein Notaus kann beispielsweise eine vollständige Deaktivierung des ersten Haushaltsgeräts umfassen.

Dies Funktionen erleichtern die Bedienung des ersten Haushaltsgeräts und tragen zudem zur gesteigerten Sicherheit im Betrieb des ersten Haushaltsgeräts bei.

In einer bevorzugten Ausführungsform des Verfahrens zur Sprachsteuerung gemäß dem ersten Aspekt der Erfindung ist das Verfahren computerimplementiert. Dies hat den Vorteil, dass das Verfahren mit im Stand der Technik bekannten Mittel wie beispielsweise einem Computer, einem Mikrocontroller oder einem Mikroprozessor einfach und effizient ausführbar ist. Zudem ist das Verfahren über eine Software-Update eines Betriebssoftware der vorgenannten Mittel wie den Computer, Mikrocontroller oder Mikroprozessor einfach nachrüstbar oder aktualisierbar. Damit können beispielsweise bestehende Systeme einfach mit der Funktionalität des erfindungsgemäßen Verfahrens nachgerüstet werden.

Gemäß einem zweiten Aspekt der Erfindung wird die Aufgabe durch ein erstes Haushaltsgerät gemäß Anspruch 11 gelöst. Das erste Haushaltsgerät umfasst
- eine Kamera, die eingerichtet ist, Bilder eines Nutzers im Bereich des ersten Haushaltsgeräts aufzunehmen,
- eine Steuereinheit, die eingerichtet ist, dass erfindungsgemäße Verfahren gemäß einem der Ansprüche 1 bis 10 auszuführen.

Ein derartiges Haushaltsgerät kann das erfindungsgemäße Verfahren ausführen und hat somit dieselben Vorteile wie das erfindungsgemäße Verfahren. Auf eine erneute Wiedergabe dieser Vorteile wird daher an dieser Stelle verzichtet. Das erste Haushaltsgerät kann bevorzugt in Kombination mit einem Mikrofon in einer separaten Vorrichtung gekoppelt und verwendet werden. Eine separate Vorrichtung kann beispielsweise ein im Stand der Technik bekannter Sprachassistent großer Technologieunternehmen sein. Dies hat den Vorteil, dass beim Nutzer bestehende Geräte, d.h. die separate Vorrichtung mit dem Mikrofon, nahtlos verwendet werden kann. Zudem kann bei der Herstellung des ersten Haushaltsgeräts auf ein darin enthaltenes Mikrofon verzichtet werden.

In einer bevorzugten Ausführungsform des ersten Haushaltsgeräts gemäß dem zweiten Aspekt der Erfindung umfasst das erste Haushaltsgerät ein Mikrofon, das eingerichtet ist, Tonsignale im Bereich des ersten Haushaltsgeräts aufzunehmen. In diesem Fall kann das erste Haushaltsgerät die Tonsignale ohne eine separate Vorrichtung, in der das Mikrofon enthalten ist, die Tonsignale aufnehmen und direkt auswerten. Ein derartiges erstes Haushaltsgerät verbessert somit die Durchführung des erfindungsgemäßen Verfahrens. Zudem kann die separate Vorrichtung mit dem Mikrofon eingespart werden, wodurch Ressourcen eingespart werden können.

In einer bevorzugten Ausführungsform des ersten Haushaltsgeräts gemäß dem zweiten Aspekt der Erfindung ist das erste Haushaltsgerät ein Backofen, ein Dampfgarer, eine Mikrowelle, ein Grill, ein Dialoggarer, ein Herd, ein Combi-Dampfgarer, ein Dampfgarer mit Mikrowelle, eine Vakuumierschublade oder eine Wärmeschublade ist.

Alle vorgenannten Haushaltsgeräte sind besonders für die Sprachsteuerung geeignet, da sie häufig schwere Formen, Bleche und andere Behältnisse aufnehmen, ein Nutzer beim Gebrauch der vorgenannten Haushaltsgeräte häufig beide Hände zum Tragen der Behältnisse verwendet und daher in einem solchen Fall nur über die Sprachsteuerung das erste Haushaltsgerät steuern kann.

Gemäß einem dritten Aspekt der Erfindung wird die Aufgabe durch ein System eines ersten Haushaltsgeräts und einer Kamera in einem zweiten Haushaltsgerät oder einer separaten Vorrichtung gemäß Anspruch 13 gelöst,
- wobei das erste Haushaltsgerät ein Mikrofon umfasst oder wobei das Mikrofon in einer separaten Vorrichtung vorgesehen ist,
- wobei die Kamera in dem zweiten Haushaltsgerät oder einer separaten Vorrichtung umfasst ist, wobei die Kamera eingerichtet ist, Bilder eines Nutzers im Bereich des ersten Haushaltsgeräts aufzunehmen,
- wobei die Kamera mit dem ersten Haushaltsgerät über eine physische Verbindung oder eine Funkverbindung verbunden ist,
- wobei das erste Haushaltsgerät oder das zweite Haushaltsgerät oder die Kamera eine Steuereinheit umfasst, die eingerichtet ist, dass Verfahren gemäß einem der Ansprüche 1 bis 10 auszuführen.

Die bisher beschriebenen Erläuterungen der Merkmale sind auch hier anwendbar, weswegen auf erneute Wiedergabe an dieser Stelle verzichtet und auf die oben genannten Stellen verwiesen wird.

Ein derartiges System kann das erfindungsgemäße Verfahren ausführen und hat somit dieselben Vorteile wie das erfindungsgemäße Verfahren. Auf eine erneute Wiedergabe dieser Vorteile wird daher an dieser Stelle verzichtet.

In einer bevorzugten Ausführungsform des Systems Haushaltsgeräts gemäß dem dritten Aspekt der Erfindung ist das erste und/oder zweite Haushaltsgerät ein Backofen, ein Dampfgarer, eine Mikrowelle, ein Grill, ein Dialoggarer, ein Herd, ein Combi-Dampfgarer, ein Dampfgarer mit Mikrowelle, eine Vakuumierschublade oder eine Wärmeschublade ist.

Alle vorgenannten Haushaltsgeräte sind besonders für die Sprachsteuerung geeignet, da sie häufig schwere Formen, Bleche und andere Behältnisse aufnehmen, ein Nutzer bei der Bedienung häufig beide Hände zum Tragen der Behältnisse verwendet und somit nur über die Sprachsteuerung das erste Haushaltsgerät steuern kann.

Es sei hiermit klargestellt, dass eine oder mehrere der oben beschriebenen bevorzugten Ausführungsformen, soweit widerspruchsfrei, miteinander kombinierbar sind und ebenfalls bevorzugte Ausführungsformen darstellen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine schematische Darstellung einer Ausführungsform eines erfindungsgemäßen ersten Haushaltsgeräts mit einem Nutzer im Bereich des ersten Haushaltsgeräts, und
- Fig. 2: eine schematische Darstellung einer Ausführungsform eines erfindungsgemäßen Systems.

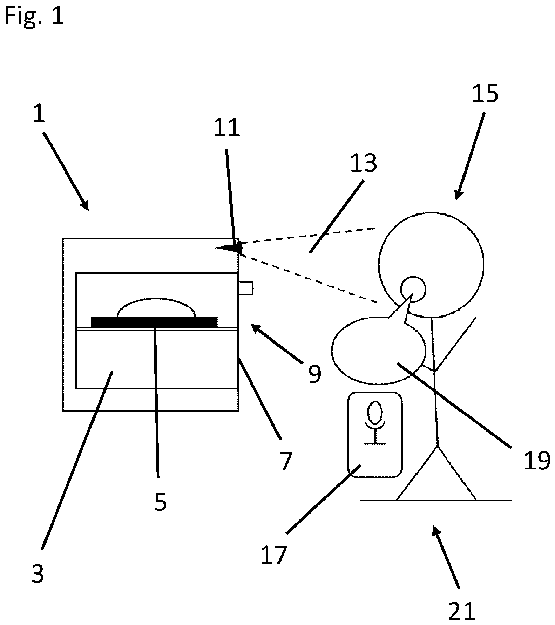

Figur 1 zeigt einen Backofen oder einen Dampfgarer, welches jeweils ein Beispiel für ein erstes Haushaltsgerät 1 ist. Das erste Haushaltsgerät 1 hat einen Garraum 3, in dem Gargut auf einem Blech 5 enthalten ist. Das erste Haushaltsgerät 1 hat eine Öffnung 7, welcher an der Vorderseite 9 des Haushaltsgeräts 1 angeordnet ist.

Das erste Haushaltsgerät 1 umfasst ferner eine Kamera 11, die hinter einer Blende angeordnet ist. Die Kamera 11 hat einen Blickbereich 13, der die Aufnahme von Bildern eines Nutzers 15, insbesondere auch der Position 21 des Nutzers 15 oder eine seiner Bewegungen im Bereich des ersten Haushaltsgerät 1 ermöglicht.

Zusätzlich ist ein Mikrofon 17 vorgesehen. Das Mikrofon 17 ist in Fig. 1 als separate Vorrichtung, in der das Mikrofon 17 enthalten ist, dargestellt. Es ist aber auch denkbar, dass das Mikrofon 17 in dem ersten Haushaltsgerät 1 angeordnet oder aufgenommen ist.

Zur Bedienung gibt der Nutzer 15 einen Sprachbefehl 19 mittels gesprochener Sprache.

Das erste Haushaltsgerät 1 ist eingerichtet das erfindungsgemäße Verfahren zur Sprachsteuerung mit den nachfolgenden Schritten auszuführen. In einem ersten Schritt werden Kameradaten der Kamera 11 eingelesen, wobei die Kamera 11 eingerichtet ist, Bilder eines Nutzers 15 im Bereich des ersten Haushaltsgeräts 1 aufzunehmen. In einem weiteren Schritt werden Mikrofondaten des Mikrofons 17 eingelesen. Dabei ist das Mikrofon 17 eingerichtet, Tonsignale im Bereich des ersten Haushaltsgeräts 1 aufzunehmen.

Anschließend erfolgt eine Analyse der eingelesenen Kameradaten und Mikrofondaten mit Hilfe eines Algorithmus. Die Analyse umfasst die nachfolgenden Teilschritte: Analysieren der Kameradaten durch den Algorithmus in Bezug auf eine Position 21 und/oder wenigstens eine Bewegung des Nutzers 15 im Bereich des Haushaltsgeräts 1, Analysieren der Mikrofondaten durch den Algorithmus in Bezug auf einen vom Nutzer 15 gesprochenen Sprachbefehl 19, und Analysieren der Kameradaten und Mikrofondaten hinsichtlich einer Korrelation zwischen dem erkannten Sprachbefehl und der erkannten Position 21 und/oder der erkannten Bewegung des Nutzers 15 im Bereich des ersten Haushaltsgeräts 1, wenn ein Sprachbefehl durch den Algorithmus in den Mikrofondaten erkannt wurde und wenn eine Position und/oder eine Bewegung des Nutzers 15 im Bereich des ersten Haushaltsgeräts 1 durch den Algorithmus in den Kameradaten erkannt wurde.

Wenn eine Korrelation zwischen dem erkannten Sprachbefehl und der Position 21 und/oder Bewegung des Nutzers 15 durch den Algorithmus erkannt wurde, erfolgt ein Steuern des ersten Haushaltsgeräts 1 in Abhängigkeit von dem Sprachbefehl. Beispielsweise kann in Reaktion auf den Sprachbefehl "Öffnen" und bei Feststellung einer Korrelation zwischen der Position des Nutzers und dem Sprachbefehl die Öffnung 7 des ersten Haushaltsgeräts 1 geöffnet werden.

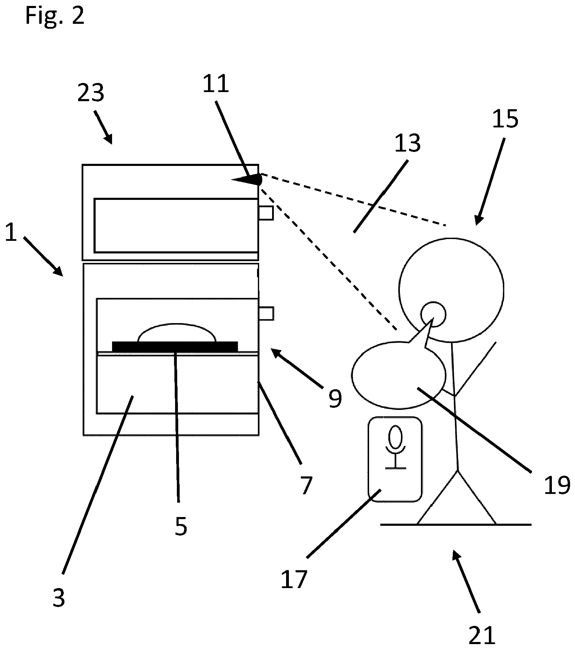

Figur 2 zeigt eine Ausführungsform eines erfindungsgemäßen Systems mit dem ersten Haushaltsgerät 1, einer Kamera 11 in einem zweiten Haushaltsgerät 23. Die Kamera ist in dem zweiten Haushaltsgerät 23 enthalten. Das erste Haushaltsgeräts 1 ist beispielsweise ein Backofen. Das zweite Haushaltsgerät 23 ist beispielsweise ein Dampfgarer, der, wie in Fig. 2 gezeigt, über dem Backofen angeordnet ist.

Das zweite Haushaltsgerät 23 umfasst die Kamera 11, die hinter einer Blende angeordnet ist. Die Kamera 11 hat einen Blickbereich 13, der die Aufnahme von Bildern des Nutzers 15, insbesondere auch der Position 21 des Nutzers 15 oder eine seiner Bewegungen im Bereich des ersten Haushaltsgerät 1 ermöglicht.

Zusätzlich ist das Mikrofon 17 vorgesehen. Das Mikrofon 17 ist in Fig. 2 wie schon in Fig. 1 als separate Vorrichtung, in der das Mikrofon 17 enthalten ist, dargestellt. Es ist aber auch denkbar, dass das Mikrofon 17 in dem ersten Haushaltsgerät 1 angeordnet oder aufgenommen ist.

Die Kamera 11 in dem zweiten Haushaltsgerät 23 ist mit dem ersten Haushaltsgerät 1 über eine physische Verbindung oder Funkverbindung verbunden. Im Fall von Fig. 2 kann das zweite Haushaltsgerät 23 mit dem ersten Haushaltsgerät über ein Datenkabel verbunden sein.

In Fig. 2 umfasst das erste Haushaltsgerät 1 oder das zweite Haushaltsgerät 23 oder die Kamera 11 in dem zweiten Haushaltsgerät eine Steuereinheit, die eingerichtet ist, dass erfindungsgemäße Verfahren auszuführen.

## Patentansprüche

1. Verfahren zur Sprachsteuerung eines ersten Haushaltsgeräts (1) umfassend die Schritte:
- Einlesen von Kameradaten einer Kamera (11), wobei die Kamera (11) eingerichtet ist, Bilder eines Nutzers (15) im Bereich des ersten Haushaltsgeräts (1) aufzunehmen,
- Einlesen von Mikrofondaten eines Mikrofons (17), wobei das Mikrofon (17) eingerichtet ist, Tonsignale im Bereich des ersten Haushaltsgeräts (1) aufzunehmen,
- Analysieren der eingelesenen Kameradaten und Mikrofondaten mit Hilfe eines Algorithmus umfassend die Teilschritte:
o Analysieren der Kameradaten durch den Algorithmus in Bezug auf eine Position (21) und/oder wenigstens eine Bewegung des Nutzers (15) im Bereich des Haushaltsgeräts (1),
o Analysieren der Mikrofondaten durch den Algorithmus in Bezug auf einen vom Nutzer (15) gesprochenen Sprachbefehl (19),
o Analysieren der Kameradaten und Mikrofondaten hinsichtlich einer Korrelation zwischen dem erkannten Sprachbefehl (19) und der erkannten Position (21) und/oder der erkannten Bewegung des Nutzers (15) im Bereich des ersten Haushaltsgeräts (1), wenn ein Sprachbefehl (19) durch den Algorithmus in den Mikrofondaten erkannt wurde und wenn eine Position (21) und/oder eine Bewegung des Nutzers (15) im Bereich des ersten Haushaltsgeräts (1) durch den Algorithmus in den Kameradaten erkannt wurde,
- Steuern des ersten Haushaltsgeräts (1) in Abhängigkeit von dem Sprachbefehl (19), wenn eine Korrelation zwischen dem erkannten Sprachbefehl (19) und der Position (21) und/oder Bewegung des Nutzers (15) durch den Algorithmus erkannt wurde.

2. Verfahren zur Sprachsteuerung gemäß einem der vorherigen Ansprüche,
wobei die Mikrofondaten als erstes analysiert werden und die Kameradaten als zweites analysiert werden, wobei die Kameradaten erst analysiert werden, wenn von dem Algorithmus in den Mikrofondaten ein Sprachbefehl (19) erkannt wurde.

3. Verfahren zur Sprachsteuerung gemäß einem der vorherigen Ansprüche,
wobei die Kameradaten als erstes analysiert werden und die Mikrofondaten als zweites analysiert werden, wobei die Mikrofondaten erst analysiert werden, wenn in den Kameradaten von dem Algorithmus eine Position (21) und/oder wenigstens eine Bewegung des Nutzers (15) im Bereich des Haushaltsgeräts (1) erkannt wurde.

4. Verfahren zur Sprachsteuerung gemäß einem der vorherigen Ansprüche,
wobei die Kameradaten und die Mikrofondaten jeweils in Abhängigkeit von der Zeit aufgenommen werden,
wobei die Korrelation zwischen dem erkannten Sprachbefehl (19) in den Mikrofondaten und der erkannten Position (21) und/oder der erkannten Bewegung des Nutzers (15) in den Kameradaten einem zeitgleichen Auftreten des Sprachbefehls (19) und der Position (21) und/oder Bewegung des Nutzers (15) entspricht.

5. Verfahren zur Sprachsteuerung gemäß einem der vorherigen Ansprüche,
wobei der Algorithmus einen Maschinenlernalgorithmus oder einen Algorithmus aus dem Bereich der künstlichen Intelligenz umfasst oder ist.

6. Verfahren zur Sprachsteuerung gemäß einem der vorherigen Ansprüche,
wobei eine Bewegung des Nutzers (15) eine Lippenbewegung, eine Augenbewegung und/oder Augenausrichtung des Nutzers (15) in Richtung des ersten Haushaltsgeräts (1), eine Handhaltung des Nutzers (15), eine Handbewegung des Nutzers (15), eine Armhaltung und/oder Armbewegung des Nutzers (15) und/oder eine Orientierung und/oder zugewandte Bewegung eines Körpers und/oder eines Oberkörpers des Nutzers (15) in Richtung der Kamera (11) und/oder des Haushaltsgeräts (1) ist.

7. Verfahren zur Sprachsteuerung gemäß einem der vorherigen Ansprüche,
wobei die Kamera (11) in einer Abdeckung oder Blende des ersten Haushaltsgeräts (1) angeordnet ist.

8. Verfahren zur Sprachsteuerung gemäß einem der vorherigen Ansprüche,
wobei die Kamera (11) in einem zweiten Haushaltsgerät angeordnet ist oder eine selbstständige Vorrichtung ist,
wobei das zweite Haushaltsgerät oder die selbstständige Vorrichtung mit dem ersten Haushaltsgerät (1) über eine physische Verbindung oder eine Funkverbindung verbunden ist.

9. Verfahren zur Sprachsteuerung gemäß einem der vorherigen Ansprüche,
wobei im Schritt des Steuerns des ersten Haushaltsgeräts (1) durch das erste Haushaltsgerät (1) wenigstens eine oder mehrere der folgenden Aktionen durchgeführt werden: eine Öffnung (7) des ersten Haushaltsgeräts (1) öffnet oder schließt; das erste Haushaltsgerät (1) bereitet eine Aufnahmevorrichtung zur Aufnahme eines Gegenstands vor und/oder nimmt den Gegenstand an; eine weitere Funktion des ersten Haushaltsgeräts (1) wird aktiviert, unterbrochen, beendet, oder umkehrt; eine Notfallfunktion oder ein Notaus des Haushaltsgeräts (1) wird ausgeführt.

10. Verfahren zur Sprachsteuerung gemäß einem der vorherigen Ansprüche,
wobei das Verfahren computerimplementiert ist.

11. Erstes Haushaltsgerät (1) umfassend
- eine Kamera (11), die eingerichtet ist, Bilder eines Nutzers (15) im Bereich des ersten Haushaltsgeräts (1) aufzunehmen,
- eine Steuereinheit, die eingerichtet ist, dass Verfahren gemäß einem der Ansprüche 1 bis 10 auszuführen.

12. Erstes Haushaltsgerät (1) weiter umfassend
- ein Mikrofon (17), das eingerichtet ist, Tonsignale im Bereich des ersten Haushaltsgeräts (1) aufzunehmen.

13. System eines ersten Haushaltsgeräts (1) und einer Kamera (11) in einem zweiten Haushaltsgerät (23) oder einer separaten Vorrichtung,
- wobei das erste Haushaltsgerät (1) ein Mikrofon (17) umfasst oder wobei das Mikrofon (17) in einer separaten Vorrichtung vorgesehen ist,
- wobei die Kamera (11) in dem zweiten Haushaltsgerät (23) oder einer separaten Vorrichtung umfasst ist, wobei die Kamera (11) eingerichtet ist, Bilder eines Nutzers (15) im Bereich des ersten Haushaltsgeräts (1) aufzunehmen,
- wobei die Kamera (11) mit dem ersten Haushaltsgerät (1) über eine physische Verbindung oder eine Funkverbindung verbunden ist,
- wobei das erste Haushaltsgerät (1) oder das zweite Haushaltsgerät (23) oder die Kamera eine Steuereinheit umfasst, die eingerichtet ist, dass Verfahren gemäß einem der Ansprüche 1 bis 10 auszuführen.

14. Verfahren nach einem der Ansprüche 1 bis 10, erstes Haushaltsgerät (1) nach Anspruch 11 oder 12 oder System nach Anspruch 13, wobei das erste Haushaltsgerät (1) ein Backofen, ein Dampfgarer, eine Mikrowelle, ein Grill, ein Dialoggarer, ein Herd, ein Combi-Dampfgarer, ein Dampfgarer mit Mikrowelle, eine Vakuumierschublade oder eine Wärmeschublade ist.

15. System nach Anspruch 13 oder 14, wobei das zweite Haushaltsgerät (23) ein Backofen, ein Dampfgarer, eine Mikrowelle, ein Grill, ein Dialoggarer, ein Herd, ein Combi-Dampfgarer, ein Dampfgarer mit Mikrowelle, eine Vakuumierschublade oder eine Wärmeschublade ist.
